# EUROPEAN PATENT APPLICATION

(11) **EP 4 803 348 A1**
(43) Date of publication of application: **09.09.2026**
(21) Application number: 26158720.8
(22) Date of filing: 16.02.2026
(51) Int. Cl.: B60L 50/51, B60L 50/60, B60L 53/24

(54) **DC POWER SUPPLY WITH SERIES-CONNECTED AC MACHINE AND LOAD OR BATTERY**

(30) Priority: 07.03.2025 US 202519073862
(71) Applicant: Cummins Inc., Columbus, IN 47201 (US)
(72) Inventor: Scheuerell, Mike James, 55082 Stillwater (US); Woodland, Lane, 47520 Cannelton (US); Leonarski, Jarsoslaw, 47201 Columbus (US); Cai, Minyu, 55432 Fridley (US)
(74) Representative: Cleveland Scott York

(57) **Abstract**

A direct current (DC) power supply (202) is disclosed. Embodiments comprise a first load (204) that optionally includes a battery, an alternator (206), and a switch (208). The alternator (206) is connected in series to the first load (204). The switch (208) is configured to receive power control signals, and to couple the first load and alternator to a second load (214).

## Description

### TECHNICAL FIELD

This application relates generally to electric power generation systems. Disclosed embodiments include a direct current (DC) power supply that can be used, for example, in battery electric and/or hybrid vehicles.

### BACKGROUND OF THE DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, locomotives and large equipment vehicles, such as mining trucks, cranes, bulldozers, etc. may require a workload and/or have a sheer size component that make implementation of alternative powertrains more difficult. Additionally, the power and environmental requirements of such vehicles during operation complicates efficient operative implementation of alternative powertrains.

Battery electric and/or hybrid vehicles typically include direct current (DC) power sources such as one or more batteries to provide power for the vehicle. Components and/or systems of the vehicles, such as for example the traction or drive motors or electronic and electrical systems, may be powered by the DC power sources. These components and systems of the vehicles may use different DC supply voltages. DC-DC converters may be included to buck or boost the battery voltage, and to control power flow into and out of the battery.

DC power sources of some battery electric vehicles, such as for example hybrid electric vehicles, may also include a generator, comprising for example an engine-driven alternator, to provide benefits such as fuel savings and performance enhancements. Because the alternator is an alternating current (AC) power source, systems of these types also include an AC-DC converter to convert the AC generator output to DC, and to control power flow.

There remains a continuing need for improved DC power supplies. DC power supplies that can be effectively used with AC power sources would be especially desirable.

### SUMMARY

Disclosed embodiments include improved DC power supplies including a load, such as for example one or more batteries, effectively integrated with an alternating machine such as a motor or an alternator or a generator. DC-DC converter functionality is effectively combined with AC-DC converter functionality to provide enhanced efficiencies.

One example is a direct current (DC) power supply. Embodiments comprise a first load, wherein the first load optionally includes a battery; an AC machine, such as for example an alternator or a motor connected in series to the first load; and a switch configured to receive power control signals and to couple the first load and the AC machine to a second load.

In some embodiments, the AC machine includes a plurality of windings, and the plurality of windings are coupled at a neutral; the first load includes a first polarity terminal coupled to the neutral of the AC machine and a second polarity terminal; and the switch couples the plurality of windings of the AC machine and the second polarity terminal of the first load to the second load. For example, each of the plurality of windings of the AC machine may include a first terminal coupled to the neutral and a second terminal; and the switch may couple each of the second terminals of the windings of the AC machine to the second load.

In any or all of the above embodiments, the first polarity terminal of the first load may comprise a positive polarity terminal.

In any or all of the above embodiments, the first polarity terminal of the first load may comprise a negative polarity terminal.

Any or all of the above embodiments may further comprise a controller coupled to the switch and responsive to power commands, and the controller may be configured to cause the switch to operate as an alternating current (AC) to DC converter in response to the power commands. Additionally or alternatively, the controller may be configured to cause the switch to operate as a DC to DC converter in response to the power commands.

In some embodiments, the controller is configured to cause the switch to simultaneously couple the first load and AC machine to the second load.

In some embodiments, the controller is configured to provide power control signals comprising a modulated zero component of a dq decomposition (i0 of dq0).

Another example is a battery electric vehicle including the DC power supply in accordance with any or all embodiments of the above example. In some embodiments the first load may include a battery.

Another example is a controller configured to provide power control signals to a DC power supply in response to power commands, wherein the DC power supply comprises a DC power supply in accordance with any or all embodiments of the example above. In some embodiments, the controller is configured to cause the DC power supply to operate as an alternating current (AC) to DC converter in response to the power commands. Alternatively or additionally, the controller may be configured to cause the DC power supply to operate as a DC to DC converter in response to the power commands.

In some embodiments, the controller is configured to cause the DC power supply to simultaneously couple the first load and AC machine to the second load.

In some embodiments, the controller is configured to provide power control signals comprising a modulated zero component of a dq decomposition (i0 of dq0).

### BRIEF DESCRIPTION OF THE DRAWINGS

The above-mentioned and other features and advantages of the technology described in this disclosure, and the manner of obtaining them, will become more apparent and the invention itself will be better understood by reference to the following description of embodiments of the invention taken in conjunction with the accompanying drawings, wherein:
FIG. 1 is a diagrammatic illustration of a system including a hybrid DC power supply, in accordance with embodiments.
FIG. 2 is a diagrammatic illustration of portions of one embodiment the DC power supply shown in FIG. 1.
FIGs. 3-6 are diagrammatic illustrations of portions of alternative embodiments of the DC power supply shown in FIG. 1.
FIG. 7 is a diagrammatic illustration of a DQ-0 current control algorithm that can be used in accordance with embodiments.
FIG. 8 is a diagrammatic illustration of a Clark-Park transformation that can be used in accordance with embodiments.

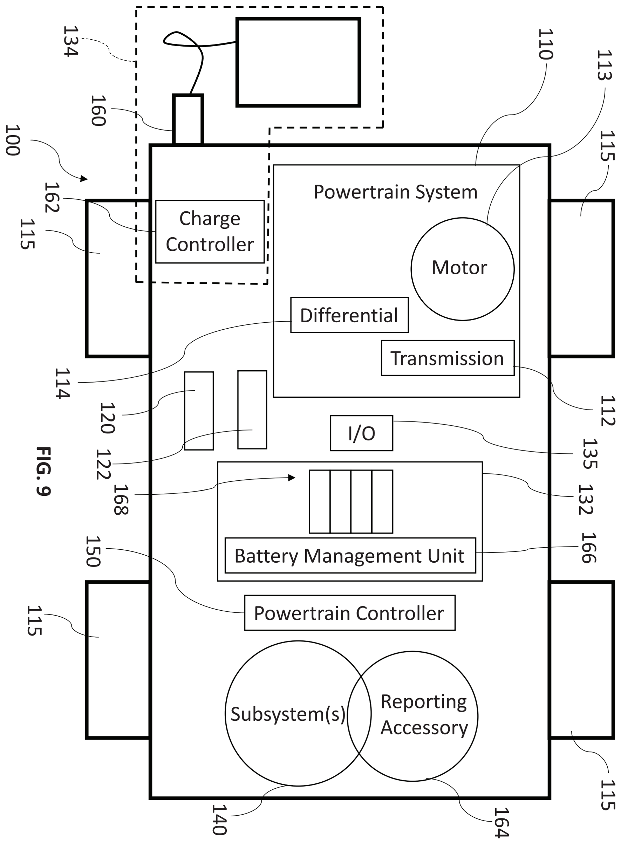

FIG. 9 is a schematic diagram of a battery electric vehicle that can include a hybrid DC power supply, in accordance with embodiments.
FIG. 10 is a diagrammatic illustration of a system including a DC power supply, in accordance with embodiments.
FIG. 11 is a diagrammatic illustration of portions of one embodiment the DC power supply shown in FIG. 10.

Corresponding reference characters indicate corresponding parts throughout the several views. The examples set out herein illustrate exemplary embodiments of the disclosure, and such examples are not to be construed as limiting the scope of the disclosure in any manner.

### DETAILED DESCRIPTION

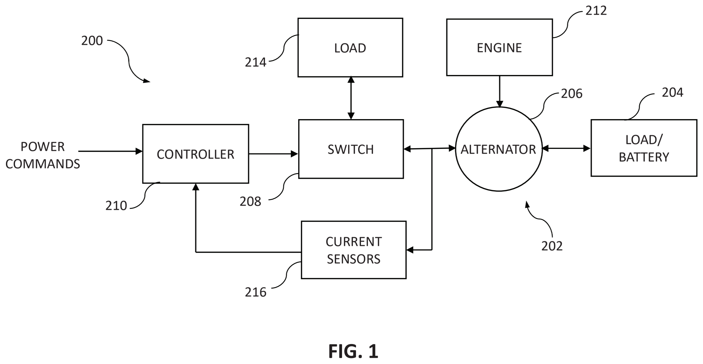

FIG. 1 is a diagrammatic illustration of a system 200 including components of a hybrid direct current (DC) power supply 202, in accordance with embodiments. As shown, the DC power supply 202 includes a series-connected load such as battery 204 and alternating current (AC) machine such as alternator 206 (e.g., an electrical series connection), a switch 208, and a controller 210. Although described as a battery 204, other embodiments alternatively or additionally include other loads. Alternator 206 is driven by a prime mover such as engine 212, and produces alternating current (AC) power. The alternator 206 and engine 212 together therefore function as a generator of AC power. The switch 208, which is responsive to power control signals from the controller 210, couples the battery 204 and alternator 206 to a load 214. As described in greater detail below, the load 214 can be any of a wide variety of devices powered by and/or providing DC power, including but not limited to components of a battery electric vehicle such as motor(s), or one or more batteries and/or other subsystems (e.g., electronic or electrical subsystems) of the battery electric vehicle that include one or more DC-powered electrical components. Embodiments of the DC power supply 202 may also include feedback devices that are coupled to the alternator 206 and that provide feedback signals to the controller 210. The illustrated embodiments, for example, include current sensors 216 that provide current feedback signals representative of currents and their relative phases in the windings of the alternator 206. Embodiments may additionally or alternatively include other feedback devices such as resolvers. In some embodiments, such as for example those illustrated in FIG. 1, the controller 210 may be coupled to the engine 212 or other prime mover.

Controller 210 produces the power control signals in response to power commands representative of the DC power to be generated by the DC power supply 202. For example, the power commands can effectively specify characteristics such as the DC voltage and current levels to be applied to the load 214. In response to the power control signals, the switch 208 causes the AC power generated by the alternator 206 to be converted to DC power, and to be applied to the load 214. DC power supply 202 can thereby be effectively operated as an AC to DC converter. Operation of the switch 208 can also effectively connect the battery 204 in series with the DC power produced by the switched alternator 206 to boost the DC voltage provided by the battery to couple the battery to the load. This allows for simultaneous control of load voltage and power provided by the alternator and battery. As such, the modes shown in the table below are made possible through the power conversion device. In response to the power commands, the controller 210 can cause the alternator 206 to not produce AC power, and to produce power control signals that cause the battery 204 to be coupled to the load 214 through the alternator using windings of the alternator as inductors. DC power supply 202 can thereby be efficiently operated as a DC to DC converter to buck or boost the voltage of the battery 204. In yet other embodiments, in response to power control signals the switch 204 can be operated to couple power from the load 214 into the battery 204 (e.g., regenerative operation). For example, bi-directional power flow can be controlled independently for both the battery 204 and the alternator 206. The battery 204, alternator 206 and DC bus connecting those components can act as either a source or a load at any time as long as one or both of the components is sourcing power. Representative operating modes (e.g., alternator power and DC (e.g., battery) power, and associated AC (e.g., Id,q) and DC (e.g., I0) control parameters are listed in Table 1 below.

**Table 1**

| **AC Machine (e.g., alternator or motor) Power** | **DC (e.g. battery) Power** | **AC (Id,q) Control** | **DC (I0) Control** |
|---|---|---|---|
| producing | zero | positive | zero |
| zero | producing | zero | positive |
| consuming | zero | negative | zero |
| zero | consuming | zero | negative |
| producing | producing | positive | positive |
| consuming | consuming | negative | negative |
| Producing | consuming | positive | negative |
| consuming | producing | negative | positive |
| zero | zero | zero | zero |

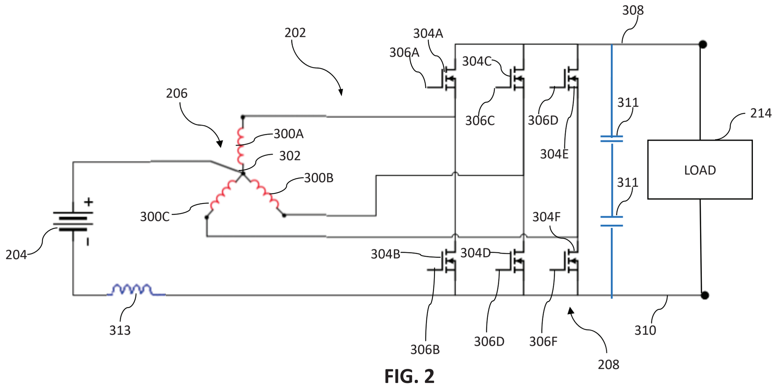

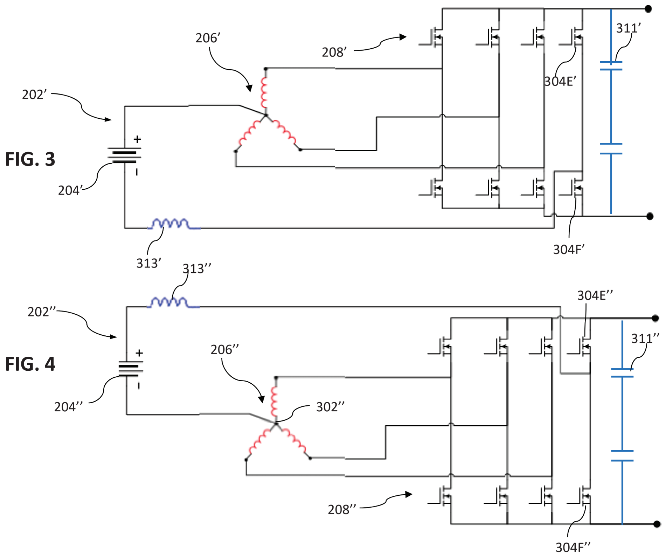

FIG. 2 is a diagrammatic illustration of the series-connected battery 204 and alternator 206, and the connections of the battery and alternator to the load 214 by the switch 208, in accordance with embodiments. For purposes of example, a three-phase alternator including windings 300A, 300B and 300C (collectively, windings 300) is illustrated. Other embodiments make use of alternators and associated switches having other numbers of phases, such as for example six- and nine- phase machines. A first terminal of each of windings 300 is connected to the other first terminals of the windings via a neutral 302. A first polarity terminal of the battery 204 (e.g., the + terminal in FIG. 2), is coupled to the neutral 302 (e.g., to provide a series connection between the battery and alternator 208. Switch 208 includes six switch elements 304A-304F (collectively switch elements 304) that couple a second polarity terminal of battery 204 (e.g., the - terminal in FIG. 3) and second terminals of the windings 300 to the load 214. In the embodiments shown in FIG. 2, the second polarity terminal of the battery 204 is connected directly to the load 214 by a terminal 310. A first set of switch elements 304A and 304B are connected in series between terminals 308 and 310 that are coupled to the load 214. Similarly, a second set of switch elements 304C and 304D are connected in series between the terminals 308 and 310, and a third set of switch elements 304E and 304F are connected in series between the terminals 308 and 310 (e.g., the first, second and third sets of switch elements 304 are connected in parallel between the terminals 308 and 310). A series-connected pair of capacitors 311 are coupled between terminals 308 and 310. The battery 204 is coupled to the switch 208 via an inductor 313.

Switch elements 304A-304F include control terminals 306A-306F, respectively (collectively switch terminals) that are coupled to the controller 210 to receive the power control signals. The second terminals of the windings 300A, 300B and 300C opposite the windings from the neutral 302 are connected between the series connected switch elements 304 of each of the first, second and third sets of switch elements, respectively, in the embodiments shown in FIG. 2. The switch elements 304 can be arranged, and coupled to the windings 300 of the alternator 206 and to the load 214, in a manner substantially the same as or similar to those of conventional or otherwise known inverters and/or rectifiers used in the AC machine (e.g., motor and alternator) field. Although not shown in FIG. 2, the circuit arrangement can also include other conventional or otherwise known components such as contactors an/or filters.

As noted above, controller 210 is configured to receive power commands specifying the desired DC power (e.g., voltage and current levels) to be generated by the DC power supply 202 and applied to the load 214. Controller 210 may also receive the feedback signals such as those provided by current sensors 216. Controller 210 processes the power commands and the feedback signals to produce the power control signals that are applied to the switch 208. Controller 210 produces the power control signals based on control algorithms. Conventional PI (proportional-integral) and vector control (e.g., dq) AC machine control algorithms can be implemented by the controller 210. In connection with these control algorithms, the zero component of a dq0 transform or decomposition (e.g., i0) can be modulated to control current to or from the battery 204 as an alternative to controlling the battery current to a value of zero as may be done in other applications. Control approaches that provide balanced DC current flow in all the phases of the alternator 206 can minimize torque ripple on the shaft of the alternator. Current flow though the alternator 206 may include both AC and DC components. In embodiments, the total (e.g., AC+DC) current through the alternator 206 can be processed and controlled to compensate for saturation and overheating limitations. Controller 210 can manage the generator and battery power accordingly. Current produced or consumed by the battery 204 and current produced or consumed by the alternator 206 can be controlled simultaneously by the controller 210. Active operation of the switch 208 by these approaches enables the control of both AC rectification and DC battery current flow from and to the DC power supply 202.

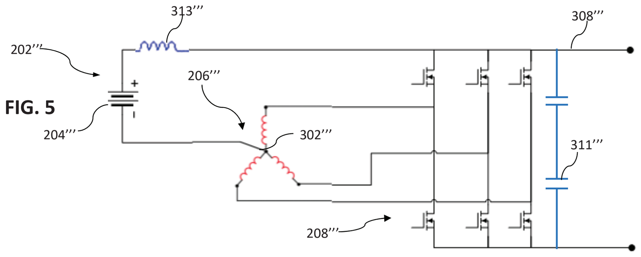

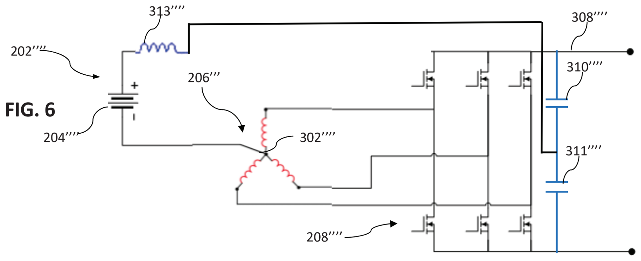

FIGs. 3-6 are diagrammatic illustrations of additional embodiments of the series-connected battery and alternator, and the connections of the battery and alternator to the load 214 by the switch. As shown, the DC power supply 202' of FIG. 3 includes a second terminal (e.g., the - terminal) of the battery 204' connected between the switch elements 304E' and 304F' of those series-connected switch elements. DC power supply 202" of FIG. 4 includes a first terminal (e.g., the + terminal) of the battery 204" connected between the switch elements 304E" and 304F" of those series-connected switch elements, and the second (e.g., the - terminal) of the battery connected to the neutral 302" of the alternator 206". DC power supply 202‴ of FIG. 5 includes a first terminal (e.g., the + terminal) of the battery 204‴ connected to the load and switch via terminal 308‴ and the second terminal (e.g., the - terminal) of the battery 204‴ connected to the neutral 302‴ of the alternator 206‴. In the DC power supply 202ʺʺ of FIG. 6, the first terminal (e.g., the + terminal) of the battery 204ʺʺ is coupled to a terminal between the capacitors 310"" and 311"" through the inductor 313ʺʺ.Other than these differences, the DC power supplies 202', 202" and 202‴ can be substantially the same as or similar to the DC power supply 202 described above in connection with FIG. 2. Yet other arrangements or topologies can be used in other embodiments. For example, in embodiments with a fourth leg (e.g., another set of switches to the positive and negative terminals of the DC bus, in addition to the switches connected to the phase legs of the alternator (e.g., as represented by the windings 300)), the controller can be configured to cause the alternator neutral voltage to be maintained half way between the maximum positive and maximum negative DC voltage levels.

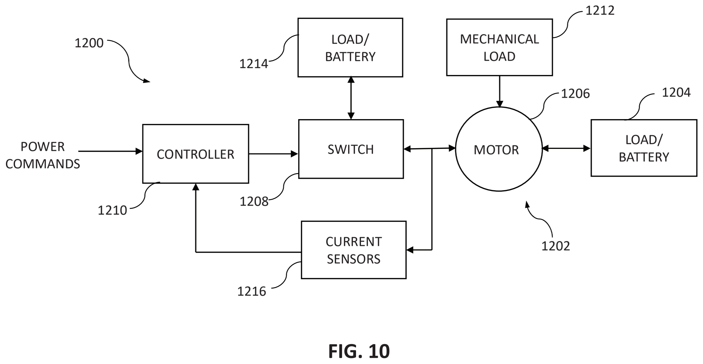

FIG. 10 is a diagrammatic illustration of a system 1200 including components of a direct current (DC) power supply 1202, in accordance with embodiments. As shown, the DC power supply 1202 includes a series-connected load such as battery 1204 and alternating current machine such as motor 1206 (e.g., an electrical series connection), a switch 1208, and a controller 1210. Although described as a battery 1204 that can provide power, other embodiments alternatively or additionally include other loads. Motor 1206 is coupled to a mechanical load 1212 in the illustrated embodiments, such as for example a drive train or wheel of a vehicle. The motor 1206 and mechanical load 1212 together can therefore function as a source of motive power. The switch 1208, which is responsive to power control signals from the controller 1210, couples the battery 1204 and motor 1206 to a load/battery 1214. The load/battery 1214 can be any of a wide variety of devices powered by and/or providing DC power, including but not limited to components of a battery electric vehicle such as motor(s), or one or more batteries and/or other subsystems (e.g., electronic or electrical subsystems) of the battery electric vehicle that include one or more DC-powered electrical components. Embodiments of the DC power supply 1202 may also include feedback devices that are coupled to the motor 1206 and that provide feedback signals to the controller 1210. The illustrated embodiments, for example, include current sensors 1216 that provide current feedback signals representative of currents and their relative phases in the windings of the motor 1206. Embodiments may additionally or alternatively include other feedback devices such as resolvers or hall sensors.

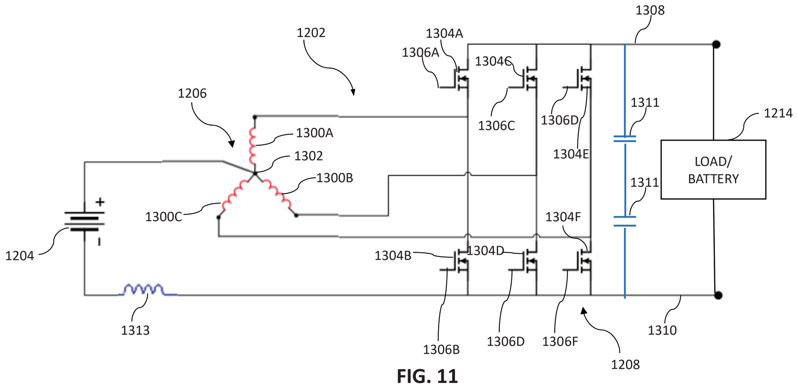

FIG. 11 is a diagrammatic illustration of the series-connected load/battery 1204 and motor 1206, and the connections of the battery and motor to the load/battery 1214 by the switch 1208, in accordance with embodiments. For purposes of example, a three-phase motor 1206 including windings 1300A, 1300B and 1300C (collectively, windings 1300) is illustrated. Other embodiments make use of motors and associated switches having other numbers of phases, such as for example six- and nine- phase machines. A first terminal of each of windings 1300 is connected to the other first terminals of the windings via a neutral 1302. A first polarity terminal of the battery 1204 (e.g., the + terminal in FIG. 11), is coupled to the neutral 1302 (e.g., to provide a series connection between the battery and motor 1206. Switch 1208 includes six switch elements 1304A-1304F (collectively switch elements 1304) that couple a second polarity terminal of battery 1204 (e.g., the - terminal in FIG. 11) and second terminals of the windings 1300 to the load/battery 1214. In the embodiments shown in FIG. 11, the second polarity terminal of the battery 1204 is connected directly to the load/battery 1214 by a terminal 1310. A first set of switch elements 1304A and 1304B are connected in series between terminals 1308 and 1310 that are coupled to the load/battery 1214. Similarly, a second set of switch elements 1304C and 1304D are connected in series between the terminals 1308 and 1310, and a third set of switch elements 1304E and 1304F are connected in series between the terminals 1308 and 1310 (e.g., the first, second and third sets of switch elements 1304 are connected in parallel between the terminals 1308 and 1310). A series-connected pair of capacitors 1311 are coupled between terminals 1308 and 1310. The battery 1204 is coupled to the switch 1208 via an inductor 1313 in the illustrated embodiments.

Switch elements 1304A-1304F include control terminals 1306A-1306F, respectively (collectively switch terminals) that are coupled to the controller 1210 to receive the power control signals. The second terminals of the windings 1300A, 1300B and 1300C opposite the windings from the neutral 1302 are connected between the series connected switch elements 1304 of each of the first, second and third sets of switch elements, respectively, in the embodiments shown in FIG. 11. The switch elements 1304 can be arranged, and coupled to the windings 1300 of the motor 1206 and to the load/battery 1214, in a manner substantially the same as or similar to those of conventional or otherwise known inverters and/or rectifiers used in the AC machine (e.g., motor and alternator) field. Although not shown in FIG. 11, the circuit arrangement can also include other conventional or otherwise known components such as contactors and/or filters. In other embodiments, the load/battery 1214 is coupled between the motor 1206 and switch 1208 in other configurations, such as for example those shown in FIGs. 3-6.

Controller 1210 produces the power control signals in response to power commands representative of bi-directional power to conduct between the AC machine such as motor 1206, a DC neutral load or storage device such as load/battery 1204 and to other electrical components such as load/battery 1214 via the DC bus. For example, in response to power control signals the switch 1208 can be operated to couple power from the battery 1204 to the motor 1206 (e.g., to drive the wheel, traction drive or other mechanical load 1212), or from the motor to the load/battery 1204 (e.g., regenerative operation of a traction drive). For example, bi-directional power flow can be controlled independently for both the load/battery 1204 and the motor 1206. The load/battery 1204, motor 1206 and DC bus connecting other sources and loads such as load/battery 1214 can act as either a source or a load as long as at least one of the components is sourcing power. Representative operating modes (e.g., motor 1206 or other AC machine power and DC (e.g., battery) power and associated AC (e.g., Id,q) and DC (e.g., I0) control parameter can include those listed in Table 1 above. In effect, controller 1210 and controller 210 can operate in similar manners.

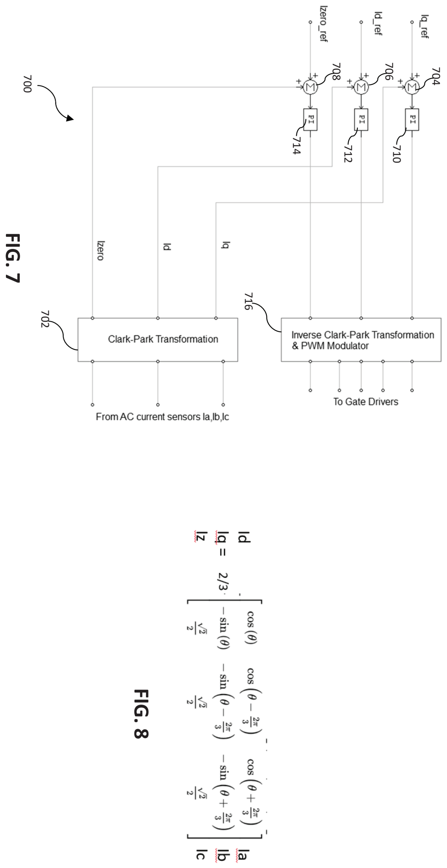

FIG. 7 is a diagrammatic illustration of DQ-0 current control method 700 that can be used in connection with the DC power supplies such as 202 and 202'-202"", and 1202. As shown, the method 700 uses sensed currents Ia, Ib and Ic (e.g., as provided as feedback by the current sensors 216 (FIG. 1)), and transforms those sensed currents into the dq reference frame values Iq, Id and Izero at transform step 702. The illustrated embodiment of method 700 uses a Clark-Park transformation at step 702. The dq reference frame values Iq, Id and Izero are applied to summing junctions 704, 706 and 708, with dq reference frame current commands Iq_ref, Id_ref and Izero_ref, respectively. The feedback-compensated dq reference frame values Iq, Id and Izero produced by the summing junctions 704, 706 and 708 are applied to proportional-integral (PI) controllers 710, 712 and 714, respectively. The outputs of the PI controllers 710, 712 and 714, which are in the dq reference frame, are transformed into the power control signals applied to the switches such as 208 and 208-208ʺʺ at transform step 716. The illustrated embodiment of method 700 uses an inverse Clark-Park transformation at step 716. FIG. 8 is a diagrammatic illustration of a Clark-Park transformation that can be used in embodiments. In embodiments, for example, the method 700 can be performed by the controller 200 shown in FIG. 1.

FIG. 6 is a schematic diagram of a battery electric vehicle 100 that may include a hybrid DC power source, such as for example DC power sources 202, 202', 202" or 202"', or 1202 in accordance with embodiments. Although described for example as a component of battery electric vehicle 100, hybrid DC power sources in accordance with this disclosure can be used in any other appropriate application, such as for example vehicles with alternative hybrid powertrains and/or vehicles such as locomotives, large equipment vehicles including mining trucks, construction equipment. While the vehicle is referred to as a battery electric vehicle, it is to be understood that the vehicle may include a hybrid vehicle, such as a plug-in hybrid vehicle, powered or otherwise operable via a battery and, optionally, one or more of a generator (e.g., a power generator, generator plant, electric power strip, on-board rechargeable electricity storage system, etc.) and a motor (e.g., an electric motor, traction motor, etc.). For example, the hybrid DC power supply may be used to provide multiple supply voltages from a single alternator and converter, for example in vehicles requiring both 12V and 48V power supplies.

Battery electric vehicle 100 may be operable in at least one of a reverse direction (e.g., a backward direction relative to a front end of battery electric vehicle 100) and a non-reverse direction (e.g., a forward direction, angular direction, etc., relative to the front end of battery electric vehicle 100). Battery electric vehicle 100 may be an on-road or off-road vehicle including, but not limited to, cars, trucks, ships, boats, vans, airplanes, spacecraft, or any other type of vehicle.

Battery electric vehicle 100 comprises a powertrain controller 150 communicably and operatively coupled to a powertrain system 110, a brake mechanism 120, an accelerator pedal 122, one or more sensors, an operator input/output (I/O) device 135, and one or more additional vehicle subsystems 140. Battery electric vehicle 100 may include additional, fewer, and/or different components systems than depicted in FIG. 6, such that the principles, methods, systems, apparatuses, processes, and the like of the present disclosure are intended to be applicable with any suitable vehicle configuration. It should also be understood that the principles of the present disclosure should not be interpreted to be limited to on-highway vehicles; rather, the present disclosure contemplates that the principles may also be applied to a variety of other applications including, but not limited to, off-highway construction equipment, mining equipment, marine equipment, locomotive equipment, etc.

Powertrain system 110 facilitates power transfer from a battery 132 and/or a motor 113 to power battery electric vehicle 100. In an exemplary embodiment, powertrain system 110 includes motor 113 operably coupled to battery 132 and charge system 134, where motor 113 transfers power to a final drive (e.g., wheels 115) to propel battery electric vehicle 100. As depicted, powertrain system 110 may include other various components, such as a transmission 112 and/or differential 114, where differential 114 transfers power output from transmission 112 to final drive 115 to propel battery electric vehicle 100. Powertrain controller 150 of battery electric vehicle 100 provides electricity to motor 113 (e.g., an electric motor) in response to various inputs received by powertrain controller 150, for example, from accelerator pedal 122, sensors, vehicle subsystems 140, charge system 134 (e.g., a battery charging system, rechargeable battery, etc.). In some embodiments, electricity provided to power motor 113 and/or electrical components of subsystems 140 may be provided by an onboard gasoline-engine generator, a hydrogen fuel cell, the hybrid DC power source described herein, etc.

In some embodiments, battery electric vehicle 100 may include transmission 112. Transmission 112 may be structured as any type of transmission compatible with battery electric vehicle 100, including a continuous variable transmission, a manual transmission, an automatic transmission, an automatic-manual transmission, or a dual clutch transmission, for example. Accordingly, as transmissions vary from geared to continuous configurations, transmission 112 may include a variety of settings (e.g., gears, for a geared transmission) that affect different output speeds based on an engine speed or motor speed. Like transmission 112, motor 113, differential 114, and final drive 115 may be structured in any configuration compatible with battery electric vehicle 100. In some embodiments, transmission 112, is omitted and motor 113 is directly coupled to differential 114. In other embodiments, motor 113 is directly coupled to final drive 115 as a direct drive application. In some examples, battery electric vehicle may comprise multiple instances of motor 113, for example, one instance for each driven wheel, one instance per driven axle, or other compatible arrangements.

Brake mechanism 120 may be implemented as a brake (e.g., hydraulic disc brake, drum brake, air brake, etc.), braking system, or any other device configured to prevent or reduce motion by slowing or stopping components (e.g., a wheel, axle, pedal, crankshaft, driveshaft, etc. of battery electric vehicle 100). Generally, brake mechanism 120 is configured to receive an indication of a desired change in the vehicle speed. In some embodiments, brake mechanism 120 comprises a brake pedal operable between a released state and an applied state by an operator of battery electric vehicle 100. The brake pedal may be configured as a pressure-based system responsive to applied pressure or a travel-based system responsive to a travel distance of the pedal, where a force applied to brake mechanism 120 is proportional to the pressure and/or travel distance. In some embodiments, all or a portion of brake mechanism 120 is incorporated into motor 113, for example, as a regenerative brake mechanism.

Generally, the released state of brake mechanism 120 corresponds to a brake pedal in a default location where the brake mechanism is not applied, for example, when the operator's foot is not placed on the brake pedal at all, or merely resting on the brake pedal such that a minimum actuation force is not exceeded (e.g., a spring-assisted, hydraulic-assisted, or servo-assisted force that pushes the brake pedal to the default location). In some embodiments, the brake pedal is combined with accelerator pedal 122 in a one-pedal driving configuration. In some examples, the applied state of brake mechanism 120 may correspond to the brake pedal being pressed with a force that meets or exceeds the minimum actuation force. In other examples, the applied state of brake mechanism 120 corresponds to the brake pedal being pressed so that the travel distance of the brake pedal meets or exceeds a minimum travel distance. Generally, the minimum actuation force and/or minimum travel distance help to prevent accidental actuation of brake mechanism 120. Different levels of the minimum actuation force and/or minimum travel distance may be used for different implementations of brake mechanism 120, for example, relatively higher forces or travel distance for a foot-actuated brake pedal, relatively lower forces or travel distance for a hand-actuated brake lever. Although the brake pedal may have a range of pressures and/or travel distances that provide at least some braking effect on battery electric vehicle 100 (e.g., high pressures for hard or emergency braking, low pressures for gradual braking or "feathering" the brakes), this range of pressures and/or travel distances are within the applied state.

The released state may correspond to an indication of a desired increase in vehicle speed, while the applied state may correspond to an indication of a desired reduction in vehicle speed. In some embodiments, a reduction in actuation force and/or travel distance corresponds to a desired increase in vehicle speed, while an increase in actuation force and/or travel distance corresponds to a desired reduction in vehicle speed.

Accelerator pedal 122 may be structured as any type of torque and/or speed request device included with a system (e.g., a floor-based pedal, an acceleration lever, paddle or joystick, etc.). Sensors associated with accelerator pedal 122 and/or brake mechanism 120 may include a vehicle speed sensor that provides a vehicle speed signal corresponding to a vehicle speed of battery electric vehicle 100, an accelerator pedal position sensor that acquires data indicative of a depression amount of the pedal (e.g., a potentiometer), a brake mechanism sensor that acquires data indicative of a depression amount (pressure or travel) of brake mechanism 120, a coolant temperature sensor, a pressure sensor, an ambient air temperature, or other suitable sensors.

Battery electric vehicle 100 may include operator I/O device 135. Operator I/O device 135 may enable an operator of the vehicle to communicate with battery electric vehicle 100 and/or powertrain controller 150. Analogously, operator I/O device 135 enables battery electric vehicle 100 and/or powertrain controller 150 to communicate with the operator. For example, operator I/O device 135 may include, but is not limited to, an interactive display (e.g., a touchscreen) having one or more buttons, input devices, haptic feedback devices, an accelerator pedal, a brake pedal, a shifter or other interface for transmission 112, a cruise control input setting, a navigation input setting, or other settings or adjustments available to the operator. Via operator I/O device 135, powertrain controller 150 can also provide commands, instructions, and/or information to the operator or a passenger.

Battery electric vehicle 100 includes one or more vehicle subsystems 140, which may generally include one or more sensors (e.g., a speed sensor, ambient pressure sensor, temperature sensor, etc.), as well as any other subsystem that may be included with a vehicle. Vehicle subsystems 140 may also include torque sensors for one or more of motor 113, transmission 112, differential 114, and/or final drive 115. Other vehicle subsystems 140 may include a steering subsystem for managing steering functions, such as electrical power steering, and output information such as wheel position and fault codes corresponding to steering battery electric vehicle 100; an electrical subsystem which may include audio and visual indicators, such as hazard lights and speakers configured to emit audible warnings, as well as other functions; and a thermal management system, which may include components such as a radiator, coolant, pumps, fans, heat exchangers, computing devices, and associated software applications. Battery electric vehicle 100 may include further sensors other than those otherwise discussed herein, such as cameras, LIDAR, and/or RADAR, temperature sensors, smoke detectors, virtual sensors, among other potential sensors.

Powertrain controller 150 may be communicably and operatively coupled to powertrain system 110, brake mechanism 120, accelerator pedal 122, operator I/O device 135, and one or more vehicle subsystems 140. Communication between and among the components may be via any number of wired or wireless connections. For example, a wired connection may include a serial cable, a fiber optic cable, an SAE J1939 bus, a CAT5 cable, or any other form of wired connection. In comparison, a wireless connection may include the Internet, Wi-Fi, Bluetooth, Zigbee, cellular, radio, etc. In one embodiment, a controller area network (CAN) bus including any number of wired and wireless connections provides the exchange of signals, information and/or data. Powertrain controller 150 is structured to receive data (e.g., instructions, commands, signals, values, etc.) from one or more of the components of battery electric vehicle 100 as described herein via the communicable coupling of powertrain controller 150 to the systems and components of battery electric vehicle 100. In some embodiments, an additional or alternative controller may be used for receiving data from certain systems or components.

In vehicles including charge system 134, such as a plug-in charging system, battery electric vehicle 100 may powertrain controller 150 may control charging of battery 132 when a charger 160 of charge system 134 is connected to battery electric vehicle 100. A charge controller 162 establishes communications between powertrain controller 150 and charger 160. Charge controller 162 may receive a charge command from powertrain controller 150 and charger 160. Charge controller 162 may monitor sensor signals and perform safety and performance checks and determine faults based thereon. For example, charge controller 162 may determine a fault if charging has started but a physical connection between charger 160 and battery electric vehicle 100 fails to be detected or is detected to be outside safe boundaries. In other words, charge controller 162 may function as a communication interface between charger 160 and powertrain controller 150.

Powertrain controller 150 may be communicably coupled with charger 160, battery 132 and a reporting accessory 164 so that digital data may be transferred between components. Reporting accessory 164 may be include a vehicle subsystem 140 or another vehicle component. A CAN bus may be implemented to provide communications. In some embodiments, a first CAN bus may be implemented to provide communications between a first plurality of components while a second CAN bus may be implemented to provide communications between a second plurality of components. Any series or parallel communication scheme and protocol known in the arm may be implemented to provide communication.

Reporting accessory 164 may be operable to communicate information to powertrain controller 150. Such information may include identification, current demand, high or low voltage power draw, and other information required for operation of battery electric vehicle 100. Identification information may include a maximum current capacity of reporting accessory 164, for example. The current demand may be dynamic, such that the current demanded by reporting accessory 164 varies. Reporting accessory 164 may include an air-conditioning system, for example, and the current demand may vary based on a measured actual temperature of an interior of battery electric battery 100 compared to a target temperature. By reporting current demand to powertrain controller 150, reporting accessory 164 enables powertrain controller 150 to more accurately determine the target current to generate the charge command to charger 162. Comparatively, when the load of a non-reporting accessory is dynamic and unknown, charger 162 may underdeliver current to battery 132, extending charging time. The charge command may also take into account the charger's capability to deliver current and indicates to charger 162 the level of current to output to battery electric vehicle 100, which is ideally sufficient to optimally charge battery 132 and also power the accessories.

Battery 132 may include one or more battery packs including a battery management unit 166 and battery modules 168. FIG. 6 is not determinative of the number of battery modules within a battery pack or the number of battery packs within battery 132. Battery 132 may include a greater number of battery packs and/or a greater or lesser number of battery modules. Temperature, voltage, and other sensors may be provided to enable battery management unit 166 to manage the charging and discharging of battery modules 168 without exceeding their limits, to detect and manage faults, and to perform other known functions. Battery management unit 166 may transmit data to powertrain controller 150 related to information about battery 132, including the battery charge power limit, temperature, faults, etc. Battery 132 may include a current sensor to provide a measured current value to battery management unit 166, which may be used to affect the charge command provided to charger 162. The current sensor may be located elsewhere. Multiple current sensors may be used, each current sensor associated with a battery module of battery 132, where the sum of the measured currents being the measured current of battery 132.

Powertrain controller 150 may include a charge logic operable to determine a command for charger 162 to supply a target current to battery 132. The charge logic may also be integrated with a controller of battery management unit 166 or provided in a standalone controller communicatively coupled to powertrain controller 150. The term "logic" as used herein includes software and/or firmware comprising processing instructions executing on one or more programmable processors, application-specific integrated circuits, field-programmable gate arrays, digital signal processors, hardwired logic, or combinations thereof, which may be referred to as "controllers". Therefore, in accordance with the disclosure, various logic may be implemented in any appropriate fashion. A non-transitory machine-readable medium comprising logic can additionally be included within any tangible form of a computer-readable carrier, such as a solid-state memory, containing an appropriate set of computer instructions and data structures that would cause a processor to carry out the techniques described herein. A non-transitory computer-readable medium, or memory, may include random access memory (RAM), read-only memory (ROM), erasable programmable read-only memory (e.g., EPROM, EEPROM, or Flash), or any tangible medium capable of storing information.

A transport control system and charging system may communicatively connect multiple chargers and control charging processes in a depot, linking charging points, power supplies, and operational information systems, such as planning and scheduling systems. The transport control system may provide the charging management system information such as estimated arrival time of vehicles, time available for charging, and scheduled pull-out time. The charging management system can then calculate the charging requirements for each vehicle and optimize charging processes for the fleet of vehicles to, for example, avoid expensive grid peak load periods where possible. The charging management system may also assign time slots for charging to each vehicle and monitor the progress of charging of each vehicle. The charging management system may receive from each vehicle an estimated time to full charge. In other embodiments, the vehicle may provide the relevant data to the charging management system, which may then estimate the time to full charge within its control logic.

Although FIG. 6 is described as illustrating a battery electric vehicle, the disclosure provided herein may also apply to vehicles having other powertrains, such as, for example, a plug-in hybrid vehicle. In such embodiments, the vehicle optionally includes an engine which may be structured as an internal combustion engine that receives a chemical energy input (e.g., a fuel such as natural gas, gasoline, ethanol, or diesel) from a fuel delivery system, and combusts the fuel to generate mechanical energy, in the form of a rotating crankshaft. In such an embodiment, transmission receives the rotating crankshaft and manipulates the speed of the crankshaft (e.g., the engine speed, which is usually expressed in revolutions-per-minute (RPM)) to affect a desired draft shaft speed. A rotating drive shaft may be received by differential, which provides the rotation energy from the drive shaft to final drive, which then propels or moves the vehicle.

While this invention has been described as having exemplary designs, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements. The scope is accordingly to be limited by nothing other than the appended claims, in which reference to an element in the singular is not intended to mean "one and only one" unless explicitly so stated, but rather "one or more."

Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B or C may be present in a single embodiment; for example, A and B, A and C, B and C, or A and B and C.

Systems, methods and apparatus are provided herein. In the detailed description herein, references to "an example," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic with the benefit of this disclosure in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. § 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

For the purposes of promoting an understanding of the principles of the present disclosure, reference is made to the embodiments illustrated in the drawings, which are described elsewhere herein. The exemplary embodiments disclosed herein are not intended to be exhaustive or to limit the disclosure to the precise form disclosed in the detailed description. Rather, these exemplary examples were chosen and described so that others skilled in the art may utilize their teachings.

The terms "couples," "coupled," and variations thereof are used to include both arrangements wherein two or more components are in direct physical contact and arrangements wherein the two or more components are not in direct contact with each other (e.g., the components are "coupled" via at least a third component), but yet still cooperate or interact with each other. Furthermore, the terms "couples," "coupled," and variations thereof refer to any connection for machine parts known in the art, including, but not limited to, connections with bolts, screws, threads, magnets, electro-magnets, adhesives, friction grips, welds, snaps, clips, etc.

Throughout the present disclosure and in the claims, numeric terminology, such as first and second, is used in reference to various components or features. Such use is not intended to denote an ordering of the components or features. Rather, numeric terminology is used to assist the reader in identifying the component or features being referenced and should not be narrowly interpreted as providing a specific order of components or features.

One of ordinary skill in the art will realize that the embodiments provided can be implemented in hardware, software, firmware, and/or a combination thereof. Programming code according to the embodiments can be implemented in any viable programming language such as C, C++, HTML, XTML, JAVA or any other viable high-level programming language, or a combination of a high-level programming language and a lower level programming language.

As used herein, "battery" or variations thereof can refer to one of numerous different types, each of which is recognizable by one skilled in the art. For instance, "battery" can include a collection of battery cells, battery modules, module-to-pack arrangements, cell-to-pack arrangements and the like. Such variations have been contemplated and are well within the scope of this disclosure.

## Claims

1. A direct current, DC, power supply (202), comprising:
a first load (204), wherein the first load optionally includes a battery;
an alternating current, AC, machine (206) connected in series to the first load; and
a switch (208) configured to receive power control signals and to couple the first load (204) and AC machine (206) to a second load (214).

2. The DC power supply of claim 1, wherein:
the AC machine (206) comprises an alternator including a plurality of windings (300), and the plurality of windings are coupled at a neutral (302);
the first load (204) includes a first polarity terminal coupled to the neutral of the alternator and a second polarity terminal; and
the switch (208) couples the plurality of windings of the alternator and the second polarity terminal of the first load to the second load.

3. The DC power supply of claim 2, wherein:
each of the plurality of windings (300) of the alternator includes a first terminal coupled to the neutral and a second terminal; and
the switch (208) couples each of the second terminals of the windings of the alternator to the second load.

4. The DC power supply of claim 2 or 3, wherein the first polarity terminal of the first load comprises a positive polarity terminal, or wherein the first polarity terminal of the first load comprises a negative polarity terminal.

5. The DC power supply of any of the preceding claims, wherein:
the AC machine (206) comprises a motor including a plurality of windings, and the plurality of windings are coupled at a neutral (302);
the first load (204) includes a first polarity terminal coupled to the neutral of the motor and a second polarity terminal; and
the switch (208) couples the plurality of windings of the motor and the second polarity terminal of the first load to the second load.

6. The DC power supply of claim 5, wherein:
each of the plurality of windings (300) of the motor includes a first terminal coupled to the neutral and a second terminal; and
the switch (208) couples each of the second terminals of the windings of the motor to the second load.

7. The DC power supply of any of the preceding claims, further comprising a controller (210) coupled to the switch (208) and responsive to power commands, and wherein the controller is configured to cause the switch to operate as an AC to DC converter in response to the power commands, and/or wherein the controller is configured to cause the switch to operate as a DC to DC converter in response to the power commands.

8. The DC power supply of claim 7, wherein the controller (210) is configured to cause the switch (208) to simultaneously couple the first load (204) and the AC machine (206) to the second load (214).

9. The DC power supply of claim 7 or 8, wherein the controller (210) is configured to provide power control signals comprising a modulated zero component of a dq decomposition (i0 of dq0).

10. The DC power supply of any of claims 7-9, wherein the controller (210) is configured to provide switch control signals comprising a modulated zero component of a dq decomposition (i0 of dq0).

11. A battery electric vehicle including the DC power supply (202) of any of the preceding claims.

12. A controller (210) configured to provide power control signals to a DC power supply (202) in response to power commands, wherein the DC power supply comprises a DC power supply in accordance with any of the preceding claims.

13. The controller of claim 12, wherein the controller (210) is configured to cause the DC power supply (202) to operate as an AC to DC converter in response to the power commands, and/or wherein the controller is configured to cause the DC power supply to operate as a DC to DC converter in response to the power commands.

14. The controller of claim 12 or 13, wherein the controller (210) is configured to cause the DC power supply (202) to simultaneously couple the first load (204) and alternator (206) to the second load (214).

15. The controller of any of claims 12-14, wherein the controller (210) is configured to provide power control signals comprising a modulated zero component of a dq decomposition (i0 of dq0).
